# EUROPÄISCHE PATENTANMELDUNG

(11) **EP 3 202 260 A1**
(43) Veröffentlichungstag der Anmeldung: **09.08.2017**
(21) Anmeldenummer: 16000244.0
(22) Anmeldetag: 02.02.2016
(51) Int. Cl.: A01K 63/04, B01D 61/14, C02F 1/44, C02F 1/52, C02F 1/56, C02F 9/00, C02F 103/20

(54) **VERFAHREN ZUR AUFBEREITUNG ZIRKULIERENDEN WASSERS IN KREISLAUFANLAGEN**

(71) Anmelder: Veolia Water Solutions & Technologies Support, 94410 Saint-Maurice (FR)
(72) Erfinder: Brockmann, Martin, 49525 Lengerich (DE); Schnüll, Dietmar, 40670 Meerbusch (DE)
(74) Vertreter: Patentanwaltskanzlei Methling

(57) **Zusammenfassung**

Die Erfindung betrifft ein Verfahren zur Aufbereitung zirkulierenden Wassers in Kreislaufanlagen, insbesondere in rezirkulierenden Systemen für Aquakulturen, wobei zumindest ein Teilstrom des zirkulierenden Wassers über zumindest einen Bypass geleitet und in dem Bypass mittels zumindest einer Ultra- und/oder Mikrofiltration aufbereitet und nach der Ultra- und/oder Mikrofiltration in das zirkulierende Wasser zurück geleitet wird, wobei die Steuerung des Massenstromes des Teilstromes in Abhängigkeit eines oder mehrerer für die Wasserqualität des zirkulierende Wassers charakteristischen Parameters erfolgt.

## Beschreibung

Die Erfindung betrifft ein Verfahren zur Aufbereitung zirkulierenden Wassers in Kreislaufianlagen, insbesondere in rezirkulierenden Systemen für Aquakulturen, wobei ein Teilstroms des zirkulierenden Wassers über zumindest einen Bypass geleitet und mittels zumindest einer Ultra- und/oder Mikrofiltration aufbereitet und nach der Ultra- und/oder Mikrofiltration in das zirkulierende Wasser zurück geleitet wird.

Derartige Verfahren zur Aufbereitung zirkulierenden Wassers insbesondere in rezirkulierenden Systemen für Aquakulturen (engl: Recirculating Aquaculture System, RAS) sind bekannt. Derartige Aquakulturen dienen der Fischzucht und der Zucht anderer Meerestiere wie beispielsweise Garnelen oder Scampi-Dabei wird das zirkulierende Wasser permanent aufbereitet, um die für die Aquakulturen erforderliche Wasserqualität bereit zu stellen.

Nachteilig bei dem bekannten System ist es, dass diese einen sehr hohen Energieverbrauch aufweisen und teilweise nicht die erforderliche Wasserqualität gewährleistet werden kann.

Aufgabe der Erfindung ist es daher, ein Verfahren zur Aufbereitung zirkulierenden Wassers in Kreislaufanlagen, insbesondere in rezirkulierenden Systemen für Aquakulturen, derartig weiterzubilden, dass diese einen energieoptimierten Betrieb gestatten und gleichzeitig die erforderliche Wasserqualität bereitstellen können.

Diese Aufgabe wird erfindungsgemäß durch ein Verfahren gemäß Anspruch 1 gelöst. Vorteilhafte Weiterbildungen der Erfindung sind in den Unteransprüchen angegeben.

Besonders vorteilhaft bei dem Verfahren zur Aufbereitung zirkulierenden Wassers in Kreislaufanlagen, insbesondere in rezirkulierenden Systemen für Aquakulturen, wobei ein Teilstrom des zirkulierenden Wassers über zumindest ein Bypass geleitet und mittels zumindest einer Ultra- oder Mikrofiltration aufbereitet und nach der Ultra- oder Mikrofiltration in das zirkulierende Wasser zurückgeleitet wird, ist es, dass die Steuerung des Massenstromes des Teilstromes in Abhängigkeit eines oder mehrerer für die Wasserqualität des zirkulierende Wassers charakteristischen Parameters erfolgt.

Bei der Kreislaufanlage kann es sich um eine teilgeschlossene, geschlossene oder integrierte Kalt- und Warmwasser-Kreislaufanlage handeln. Eine Filtration durch Membranen mit einer Porengröße kleiner als 0,1 µm wird in der Regel Ultrafiltration genannt, während die Filtration bei Porengrößen von mehr als 0,1 µm üblicherweise als Mikrofiltration bezeichnet wird.

Zur Aufbereitung des über den Bypass geleiteten Teilstromes können somit ein oder mehrere Ultrafiltrationsmodule mit einer Porengröße kleiner als 0,1 µm und/oder ein oder mehrere Mikrofiltrationsmodule mit einer Porengröße größer als 0,1 µm angeordnet sein. Es können mehrere Ultrafiltrationsmodule parallel oder in Reihe geschaltet sein. Es können mehrere Mikrofütrationsmodule parallel oder in Reihe geschaltet sein. Ferner können mehrere Ultrafiltrationsmodule und mehrere Mikrofiltrationsmodule parallel oder in Reihe geschaltet sein.

Der über den Bypass geleitete Teilstrom kann nach der Aufbereitung mittels der Ultra- und/oder Mikrofiltration wieder zurück in den Hauptstrom eingeleitet werden oder direkt in einen Tank einer Aquakultur eingeleitet werden. Vorzugsweise erfolgt die Steuerung des Massenstromes des Teilstromes in Abhängigkeit der Trübung und/oder in Abhängigkeit des Gehaltes an gelöstem Eisen und/oder in Abhängigkeit des Gehaltes an gelöstem Aluminium des zirkulierenden Wassers.

Die drei Parameter Trübung, Gehalt an gelöstem Eisen sowle Gehalt an gelöstem Aluminium können alternativ oder kumulativ zur Steuerung des Massenstromes des Teilstromes des zirkulierenden Wassers, welcher zumindest über einen Bypass geleitet und mittels zumindest einer Ultra- und/oder Mikrofiltration aufbereitet wird, herangezogen werden. Diese Parameter sind entscheidende Parameter für die Wasserqualität in der Kreislaufanlage.

Kumulativ zu einem oder mehreren dieser Parameter können weitere Parameter wie beispielsweise der Massenstrom, die Wassertemperatur, der chemische Sauerstoffbedarf (CSC), der biologische Sauerstoffbedarf (BSB), der gesamte organische Kohlenstoff oder TOC-Wert (englisch total organic carbon) und/oder NH₄, NO₃, NO₂ herangezogen werden.

Indem auf einen oder mehrere dieser Parameter zur Steuerung des Massenstromes des Teilstromes zurückgegriffen wird, kann einerseits die gewünschte Wasserqualität gewährleistet werden, wobei andererseits der Energieverbrauch optimiert wird, da der über die Ultra- und/oder Mikrofiltration zuleitende Teilstrom gegebenenfalls herabgesenkt werden kann, was zu einer erheblichen Energieeinsparung führt.

Der Aufbereitungsschritt der Ultra- und/oder Mikrofiltration unter Verwendung von Membranfiltern ist energieintensiv, da der aufzubereitende Teilstrom mittels zumindest einer entsprechenden Förderpumpe über die Membranfilter der Ultra- und/oder Mikrofiltrationsanlage gefördert werden muss. Je größer der Massenstrom ist, der über die Ultra- und/oder Mikrofiltrationsanlage geleitet wird, umso besser wird die Wasserqualität. Andererseits steigt hierdurch der Energieverbrauch. Daher erfolgt mit dem erfindungsgemäßen Verfahren eine dahingehende Optimierung, den Massenstrom des Teilstromes, der über den Bypass geleitet und mittels zumindest einer Ultra- und/oder Mikrofiltration aufbereitet wird, in Abhängigkeit der Trübung und/oder in Abhängigkeit des Gehaltes an gelöstem Eisen und/oder in Abhängigkeit des Gehaltes an gelöstem Aluminium des zirkulierenden Wassers und/oder in Abhängigkeit weiterer für die Wasserqualität und die Wasseraufbereitung charakteristische Parameter zu steuern.

Vorzugsweise wird ein Teilstrom von 3% bis 30%, insbesondere ein Teilstroms von mehr als 5% oder mehr als 7%, insbesondere ein Teilstrom von bis zu 15% oder bis zu 20% oder bis zu 25% des zirkulierenden Wassers über den Bypass geführt. Das bedeutet, dass der entsprechende Anteil des zirkulierenden Wassers als Teilstrom über den Bypass geführt und mittels zumindest einer Ultra- und/oder Mikrofiltration, die in den Bypass eingebunden ist, aufbereitet wird.

Vorzugsweise wird dabei die Trübung des zirkulierenden Wassers mittels eines Sensors stromauf des Bypasses und/oder mittels eines Sensors stromab des Bypasses ermittelt.

Sowohl die Trübung des zirkulierenden Wassers stromauf des Bypasses als auch die Trübung des Wassers stromab des Bypasses können alternativ oder kumulativ als Parameter für die Steuerung des Massenstromes des Teilstromes herangezogen werden.

In einer bevorzugten Ausführungsform wird dem zirkulierenden Wasser und/oder dem Teilstrom in dem Bypass vor und/oder nach der Ultra- und/oder Mikrofiltration Eisensalz, insbesondere Eisenhydrogencarbonat und/oder Eisenchlorid und/oder Eisensulfat zudosiert, wobei die Steuerung der zudosierten Menge des Eisensalzes in Abhängigkeit der mittels zumindest eines Sensors ermittelten Menge des Gehaltes an gelöstem Eisen in dem zirkulierenden Wasser und/oder in dem Teilstrom vor und/oder nach der Ultra- und/oder Mikrofiltration erfolgt.

Besonders bevorzugt wird die Menge des Gehaltes an gelöstem Eisen vor der Ultra- und/oder Mikrofiltration in dem Teilstrom und/oder in dem Strom zirkulierenden Wassers ermittelt, wobei das Eisensalz besonders bevorzugt dem Teilstrom vor der Ultra- oder Mikrofiltration beigegeben wird.

Besonders bevorzugt erfolgt die Steuerung der Zudosierung von Eisensalz in einem geschlossenen Regelkreis in Abhängigkeit des mittels des Sensors ermittelten Gehaltes an gelöstem Eisen in dem zirkulierenden Wasser und/oder in dem Teilstrom vor und/oder nach der Ultra- und/oder Mikrofiltration. Durch die Zudosierung eines Eisensalzes wird das in dem zirkulierenden Wasser und/oder das in dem Teilstrom des aufzubereitenden Wassers gelöste Eisen ausgefällt.

Des Weiteren werden organische Schwebstoffe in dem Wasser mit Eisen zu größeren filterbaren Partikeln aufgebaut, sodass diese ausgefiltert werden können.

In einer bevorzugten Ausführungsform wird dem zirkulierenden Wasser und/oder dem Teilstrom in dem Bypass vor und/oder nach der Ultra- und/oder Mikrofiltration Aluminiumsalz, insbesondere Aluminiumhydrogencarbonat und/oder Aluminiumchlorid und/oder Aluminiumsulfat und/oder Aluminiumnitrat zudosiert, wobei die Steuerung der zudosierten Menge des Aluminiumsalzen in Abhängigkeit der mittels zumindest eines Sensors des Gehaltes an gelöstem Aluminium in dem zirkulierenden Wasser und/oder in dem Teilstrom vor und/oder nach der Ultra- und/oder Mikrofiltration erfolgt.

Besonders bevorzugt wird die Menge des Gehaltes an gelöstem Aluminium vor der Ultra- und/oder Mikrofiltration in dem Teilstrom und/oder in dem Strom zirkulierenden Wassers ermittelt wobei das Aluminiumsalz besonders bevorzugt dem Teilstrom vor der Ultra- und/oder Mikrofiltration beigegeben wird.

Besonders bevorzugt erfolgt die Steuerung der Zudosierung von Aluminiumsalz In einem geschlossenen Regelkreis in Abhängigkeit des mittels des Sensors ermittelten Gehaltes an gelöstem Aluminium in dem zirkulierenden Wasser und/oder in dem Teilstrom vor und/oder nach der Ultra- und/oder Mikrofiltration. Durch die Zudosierung eines Aluminiumsalzes wird das in dem zirkulierenden Wasser und/oder in dem Teilstrom des aufzubereitenden Wassers das gelöste Aluminium ausgefällt.

Alternativ oder kumulativ können dem zirkulierenden Wasser und/oder dem Teilstrom in dem Bypass vor und/oder nach der Ultra- und/oder Mikrofiltration weitere Dosiermittel wie beispielsweise Bentonit und/oder Zeolithe und/oder Aktivkohle zudosiert werden. Auch in diesem Fall erfolgt die Steuerung der Zudosierung vorzugsweise in einem geschlossenen Regelkreis in Abhängigkeit der mittels des/der Sensors/Sensoren ermittelten charakteristischen Parameter.

Vorzugsweise wird das zirkulierende Wasser vor der Aufteilung in einen Teilstrom und einen Hauptstrom mittels zumindest eines Trommelsiebs und/oder eines Mikrosiebs und/oder eines Tuchfilters aufbereitet.

Mittels eines derartigen Trommelsiebs und/oder eines Mikrosiebs und/oder eines Tuchfilters können in dem aufzubereitenden zirkulierenden Wasser enthaltene größere Partikel vor der weiteren Wasseraufbereitung aus dem zirkulierenden Wasser entfernt werden.

Besonders bevorzugt wird das zirkulierende Wasser mittels eines Fest-/Schwebebettreaktors aufbereitet. Bei einem Fest-/Schwebebettreaktor handelt es sich um eine biologische Stufe, mittels derer organische Inhaltsstoffe und Nährsalze wie Stickstoff und Phosphor in dem rezirkulierenden Wasser reduziert werden.

Ein solcher Fest-/Schwebebettreaktor kann insbesondere stromab der der Einleitung des über den Bypass geleiteten Teilstromes zurück in den Hauptstrom angeordnet sein.

Vorzugsweise wird permanent oder in zeitlichen Abständen wiederholt eine Ermittlung der Trübung und/oder des Gehaltes an gelöstem Eisen und/oder des Gehaltes an gelöstem Aluminium des zirkulierenden Wassers und/oder des Teilstromes vor und/oder nach der Ultra- und/oder Mikrofiltration durchgeführt. Es ist somit möglich, eine permanente Online-Diagnose des zirkulierenden Wassers durchzuführen. Diese Online-Diagnose kann durch permanente Überwachung eines oder mehrerer der für die Wasserqualität charakteristischen Parameter durchgeführt werden. Alternativ kann eine Ermittlung der für die Wasserqualität charakteristischen Parameter in zeitlichen Abständen wiederholt erfolgen. Ferner besteht die Möglichkeit, eine permanente Überwachung eines oder mehrerer Parameter mit einer in zeitlichen Abständen wiederholten Erfassung eines oder mehrerer anderer Parameter zu kombinieren.

Besonders bevorzugt wird dem Teilstrom in dem Bypass stromauf der Ultra- und/oder Mikrofiltration Fällungs- und/oder Flockungsmittel zudosiert. Vorzugsweise erfolgt die Steuerung der zudosierten Menge des Fällungs- und/oder Flockungsmittels in Abhängigkeit des Massenstromes des Teilstroms in dem Bypass und/oder in Abhängigkeit der Trübung des Teilstromes vor und/oder nach der Ultra- und/oder Mikrofiltration und/oder in Abhängigkeit des Gehaltes an gelöstem Eisen des Teilstromes und/oder in Abhängigkeit der Druckdifferenz über dem Filter der Ultra- und/oder Mikrofiltration und/oder in Abhängigkeit der Wassertemperatur und/oder in Abhängigkeit des pH-Wertes des Teilstromes.

Die Steuerung der zudosierten Menge des Fällungs- und/oder Flockungsmittels kann somit in Abhängigkeit eines oder mehrerer Parameter des Teilstromes erfolgen. Vorzugsweise erfolgt die Steuerung der zudosierten Menge des Fällungs- und/oder Flockungsmittels in einem geschlossenen Riegelkreis in Abhängigkeit eines oder mehrerer Parameter des Wassers des Teilstromes.

In einer besonders bevorzugten Ausführungsform des erfindungsgemäßen Verfahrens wird in den Bypass stromauf der Ultra- und/oder Mikrofiltration dem Teilstrom während eines begrenzten Zeitraumes zu Beginn eines Filterzyklus Eisensalz und/oder Aluminiumverbindungen und/oder Fällungs- und/oder Flockungsmittel zudosiert, welches dem Aufbau eines Filterkuchens auf den Membranen eines Ultra- und/oder Mikrofiltrationsmoduls dient, wobei dieser Filterkuchen in einem Rückspülvorgang am Ende des Filterzyklus, entfernt wird und der nächste Filterzyklus nach Beendigung des Rückspolvorgangs beginnt.

Durch eine zeitlich begrenzte Dosierung von Eisensalz kann somit ein Filterkuchen auf den Membranen des Ultra- und/oder Mikrofiltrationsmoduls aufgebaut werden, welcher die mechanische Wirksamkeit des Ultra- und/oder Mikrofiltrationsmoduls und das Ergebnis der Ultra- und/oder Mikrofiltration verbessert. Insbesondere wird die Entnahme von im Teilstrom gelöst vorliegender Stoffe, z.B. gelöste Eisenverbindungen, durch den Filterkuchen weiterhin ermöglicht, auch wenn keine weiteren Eisensalze mehr dosiert werden.

Beispielsweise kann die Zudosierung des Eisensalzes zu Beginn eines Filterzyklus für 5 Minuten durchgeführt und sodann abgeschaltet werden. Während des weiteren Filterzyklus dient der auf den Membranen aufgebaute Filterkuchen der Verbesserung der Filtrationswirkung des Ultra- und/oder Mikrofiltrationsmoduls. Zum Ende eines Filterzyklus, der beispielsweise 45-60 Minuten dauern kann, erfolgt dann eine Rückspülung zur Entfernung des Filterkuchens von den Membranen und es beginnt sodann ein neuer Filterzyklus zu dessen Beginn wiederum für ein zeitlichen begrenzten Zeitraum Eisensalz zudosiert wird, welches wiederum dem Aufbau eines Filterkuchens für den nächsten Filterzyklus dient.

Hierdurch kann die Wirksamkeit der Membranen des Ultra- und/oder Mikrofiltrationsmoduls gesteigert werden.

Vorzugsweise erfolgt die Steuerung des Massenstromes des Teilstromes ein einem geschlossenen Regelkreis in Abhängigkeit der Trübung und/oder in Abhängigkeit des Gehaltes an gelöstem Eisen und/oder in Abhängigkeit des Gehaltes an gelöstem Aluminium und/oder in Abhängigkeit der Wassertemperatur und/oder in Abhängigkeit des pH-Wertes des zirkulierenden Wassers und/oder des Teilstromes in dem Bypass vor und/oder nach der Ultra- und/oder Mikrofiltration.

Durch die Steuerung des Massenstromes in einem geschlossenen Regelkreis kann eine exakte Berücksichtigung eines oder mehrerer Parameter berücksichtigt werden und sowohl die Qualität der Wasseraufbereitung optimiert als auch der Energieverbrauch optimiert werden.

Die Zudosierung von Eisensalz und/oder Aluminiumverbindungen und/oder Fällungs- und/oder Flockungsmittel erfolgt dabei vorzugsweise mittels Dosierpumpen und/oder über gesteuerte Einspritzventile.

Vorzugsweise wird eine Strippung des zirkulierenden Wassers durchgeführt, insbesondere nach der Rückführung des über die Ultra- und/oder Mikrofiltration geleiteten Teilstromes in den Hauptstrom des zirkulierenden Wassers. Mittels einer derartigen Strippung kann insbesondere Kohlendioxyd aus dem zirkulierenden Wasser entfernt werden. Die Strippung des zirkulierenden Wasser kann auch stromauf des Bypasses erfolgen. Vorteilhaft ist dabei, dass hier der pH-Wert höher ist.

Vorzugsweise wird dem zirkulierenden Wasser Sauerstoff mittels zumindest einer Begasung zugeführt. Diese Sauerstoffzufuhr mittels einer Begasung erfolgt besonders bevorzugt unmittelbar vor der Rückführung des zirkulierenden Wassers in den Fischtank einer Aquakultur.

Ein Ausführungsbeispiel der Erfindung ist in der Figur dargestellt und nachfolgend näher erläutert. Es zeigt:

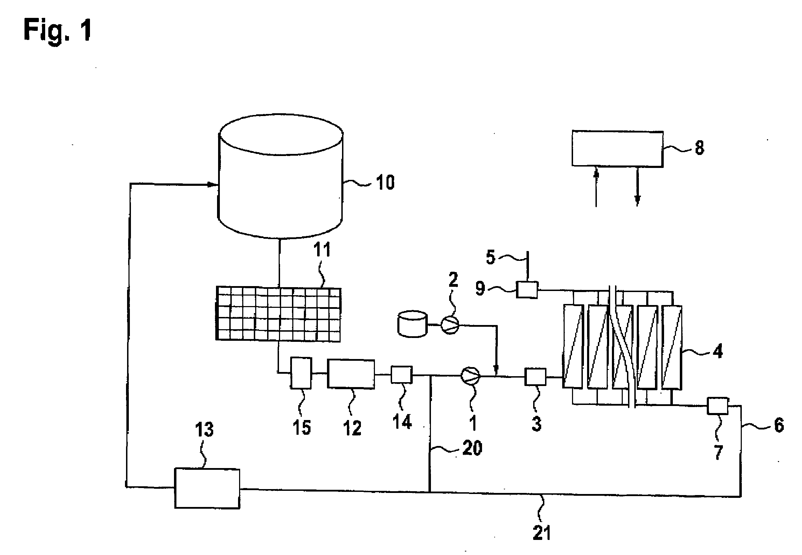

- Fig. 1: ein Anlagenschema eines rezirkulierenden Systems für Aquakulturen zur Ausführung des erfindungsgemäßen Verfahrens.

Fig, 1 zeigt ein Anlagenschema eines rezirkulierenden Systems für Aquakulturen (engl: Recirculating Aquaculture System, RAS). Zur Gewährleistung der erforderlichen Wasserqualität in dem Fischtank 10 wird dem Fischtank 10 in einem rezirkulierenden System Wasser entnommen und zunächst über ein Trommelsieb 11 geleitet.

Stromab des Trommelsiebs 11 erfolgt in einen Schwebebettreaktor 15 eine weitere Aufbereitung des rezirkulierenden Wassers. Bei dem Schwebebettreaktor 15 handelt es sich um eine biologische Stufe, mittels derer organische Inhaltsstoffe in dem rezirkulierenden Wasser reduziert werden.

Anschließend erfolgt stromab des Schwebebettreaktors 15 in einen weiteren Modul 12 eine Strippung, die insbesondere dazu dient, Kohlendioxid in dem rezirkulierenden Wasser zu reduzieren.

Stromab des Trommelsiebs 11 ist ein Sensor 14 zur Erfassung verschiedener für die Wasserqualität charakteristischer Parameter wie insbesondere zur Ermittlung der Trübung des rezirkulierenden Wassers angeordnet.

Stromab des Trommelsiebs 11 und des Sensors 14 wird der Massenstrom des rezirkulierenden Wassers aufgeteilt in einen Hauptmassenstrom in der Hauptleitung 20 sowie einen Bypassmassenstrom, der über den Bypass 21 geleitet wird. Der Bypassmassenstrom wird mittels einer in den Bypass 21 integrierten Förderpumpe 1 über das Ultrafiltrationsmodul 4 geleitet und mittels des Ultrafiltrationsmoduls 4 aufbereitet.

Der Anteil des über den Bypass 21 geleiteten Bypassmassenstromes in Bezug auf den Gesamtmassenstrom des rezirkulierenden Wassers wird in Abhängigkeit der mittels des Sensors 14 stromauf der Aufteilung in den Hauptstrom und den Bypassstrom ermittelten Trübung des rezirkulierenden Wassers in einem geschlossenen Regelkreis gesteuert.

Vor dem Eintritt in das Ultrafiltrationsmodul 4 wird dem Bypassmassenstrom mittels der Dosiereinheit 2 Fällungs- und/oder Flockungsmittel beigegeben. Unmittelbar vor dem Eintritt in das Ultrafiltrationsmodul 4 befindet sich ein weiterer Sensor 3, mittels dessen die Trübung des Wassers in den Bypassmassenstrom sowie der Gehalt an gelöstem Eisen ermittelt wird.

Die Steuerung der zudosierten Menge an Fällungs- und/oder Flockungsmittel mittels der Dosiereinheit 2 erfolgt in Abhängigkeit der mittels des Sensors 3 ermittelten für die Wasserqualität charakteristischen Parameter des Wassers in den Bypassmassenstrom.

Stromab der Ultrafiltrationseinheit 4 befindet sich eine weitere Sensoreinheit 7, mittels derer die Wasserqualität auf der Reinwasserseite 6 der Ultrafiltrationseinheit 4 erfasst wird.

Unmittelbar vor der Rückführung des rezirkulierenden Wassers in den Fischtank 10 erfolgt mittels eines weiteren Moduls 13 eine Begasung des rezirkulierenden Wassers, um den Gehalt an Sauerstoff zu erhöhen und die entsprechende Wasserqualität innerhalb des Fischtanks 10 für die Aquakultur zu gewährleisten.

Zum Ende eines zeitlich begrenzten Filterzyklus erfolgt eine Rückspülung der Ultrafiltrationseinheit 4. Das Rückspülwasser wird über den Ablauf 5 abgeleitet und zuvor mittels eines Sensors 9 überwacht, indem die für die Wasserqualität des Rückspülwassers charakteristischen Parameter erfasst werden.

Nach Ablauf einer festgelegten Zeitspanne wird der Rückspülvorgang beendet. Dabei kann mittels des Sensors 9 überprüft werden, dass das über den Ablauf 5 abgeleitete Wasser nach Beendigung des Rückspülvorgangs einen entsprechenden Reinheitsgrad aufweist und der nächste Filterzyklus begonnen werden kann.

Sämtliche Werte der Wasserqualitätsensoren 3, 7, 9, 14 werden der zentralen Steuereinheit 8 zugeführt. In Abhängigkeit der mittels der Sensoren 3, 7, 9, 14 ermittelten Werte erfolgt durch die zentrale Steuereinheit 8 eine Ansteuerung sämtlicher Anlagenkomponenten zur Wasseraufbereitung wie insbesondere der Förderpumpe 1 und der Dosiereinheit 2. Ferner erfolgt über die zentrale Steuerung 8 eine zeitliche Steuerung innerhalb der einzelnen Filterzyklen. Ebenfalls erfolgt über die zentrale Steuerung 8 die Einstellung des mittels der Förderpumpe in den Bypass 21 über die Ultrafiltration 4 geleiteten Teilstromes, welcher stromab der Ultrafiltration 4 auf der Reinwasserseite 6 wieder dem Hauptstrom in der Hauptleitung 20 zugeführt wird.

Durch eine Optimierung des Teilstromes in dem Bypass 21 kann der Energieverbrauch gesenkt werden, indem jeweils nur der Anteil des rezirkulierenden Wassers. über die Ultrafiltration 4 geleitet und mittels der Ultrafiltration 4 aufbereitet wird, welcher erforderlich ist, um die gewünschte Wasserqualität in dem Fischtank 10 zu gewährleisten.

## Patentansprüche

1. Verfahren zur Aufbereitung zirkulierenden Wassers in Kreislaufanlagen, insbesondere in rezirkulierenden Systemen für Aquakulturen, wobei zumindest ein Teilstrom des zirkulierenden Wassers über zumindest einen Bypass geleitet und in dem Bypass mittels zumindest einer Ultra- und/oder Mikrofiltration aufbereitet und nach der Ultra- und/oder Mikrofiltration in das zirkulierende Wasser zurück geleitet wird, **dadurch gekennzeichnet, dass** die Steuerung des Massenstromes des Teilstromes in Abhängigkeit eines oder mehrerer für die Wasserqualität des zirkulierende Wassers charakteristischen Parameters erfolgt.

2. Verfahren nach Anspruch 1, **dadurch gekennzeichnet dass** als charakteristischer Parameter für die Steuerung des Massenstromes des Teilstromes die Trübung und/oder der Gehalt an gelöstem Eisen und/oder der Gehalt an gelöstem Aluminium und/oder der Massenstrom und/oder die Wassertemperatur und/oder der chemische Sauerstoffbedarf und/oder der biologische Sauerstoffbedarf und/oder der gesamte organische Kohlenstoff und/oder NH₄ und/oder NO₃ und/oder NO₂ des zirkulierenden Wassers verwendet wird.

3. Verfahren nach Anspruch 1 oder 2, **dadurch gekennzeichnet dass** ein Teilstrom von 3% bis 30%, insbesondere ein Teilstrom von mehr als 5 % oder mehr als 7%, insbesondere ein Teilstrom von bis zu 15% oder bis zu 20% oder bis zu 25% des zirkulierenden Wassers über den Bypass geführt wird.

4. Verfahren nach einem der vorherigen Ansprüche, **dadurch gekennzeichnet, dass** die Trübung des zirkulierenden Wassers mittels eines Sensors stromauf des Bypasses und/oder mittels eines Sensors stromab des Bypasses ermittelt wird.

5. Verfahren nach einem der vorherigen Ansprüche, **dadurch gekennzeichnet, dass** dem zirkulierenden Wasser und/oder dem Teilstrom in dem Bypass vor und/oder nach der Ultra- und/oder Mikrofiltration Eisensalz, insbesondere Eisenhydrogencarbonat und/oder Eisenchlorid und/oder Einsensulfat zudosiert wird, wobei die Steuerung der zudosierten Menge des Eisensalzes in Abhängigkeit der mittels zumindest eines Sensors ermittelten Menge des Gehaltes an gelöstem Eisen in dem zirkulierenden Wasser und/oder in dem Teilstrom vor und/oder nach der Ultra- und/oder Mikrofiltration erfolgt.

6. Verfahren nach Anspruch 5, **dadurch gekennzeichnet, dass** die Steuerung der Zudosierung von Eisensalz in einem geschlossenen Regelkreis in Abhängigkeit des mittels des Sensors ermittelten Gehaltes an gelöstem Eisen in dem zirkulierenden Wasser und/oder in dem Teilstrom vor und/oder nach der Ultra- und/oder Mikrofiltration erfolgt.

7. Verfahren nach einem der vorherigen Ansprüche, **dadurch gekennzeichnet, dass** dem zirkulierenden Wasser und/oder dem Teilstrom in dem Bypass vor und/oder nach der Ultra- und/oder Mikrofiltration Aluminiumsalz zudosiert wird, wobei die Steuerung der zudosierten Menge des Aluminiumsalzes in Abhängigkeit der mittels zumindest eines Sensors ermittelten Gehaltes an gelöstem Aluminium in dem zirkulierenden Wasser und/oder in dem Teilstrom vor und/oder nach der Ultra- und/oder Mikrofiltration erfolgt.

8. Verfahren nach Anspruch 7, **dadurch gekennzeichnet, dass** die Steuerung der Zudosierung von Aluminiumsalz in einem geschlossenen Regelkreis in Abhängigkeit des mittels des Sensors ermittelten Gehaltes an gelöstem Aluminium in dem zirkulierenden Wasser und/oder in dem Teilstrom vor und/oder nach der Ultra- oder Mikrofiltration erfolgt.

9. Verfahren nach einem der vorherigen Ansprüche, **dadurch gekennzeichnet, dass** dem zirkulierenden Wasser und/oder dem Teilstrom in dem Bypass vor und/oder nach der Ultra- und/oder Mikrofiltration Fällungs- und/oder Flockungsmittel zudosiert wird, wobei die Steuerung der zudosierten Menge des Fällungs- und/oder Flockungsmittels in Abhängigkeit eines oder mehrerer der mittels zumindest eines Sensors ermittelten Parameter des zirkulierenden Wassers und/oder des Teilstroms vor und/oder nach der Ultra- und/oder Mikrofiltration erfolgt:

10. Verfahren nach Anspruch 9, **dadurch gekennzeichnet, dass** die Steuerung der Zudosierung von Fällungs- und/oder Flockungsmittel in einem geschlossenen Regelkreis in Abhängigkeit des mittels des Sensors ermittelten Wertes eines oder mehrerer Parameter des zirkulierenden Wassers und/oder des Teilstroms vor und/oder nach der Ultra- oder Mikrofiltration erfolgt.

11. Verfahren nach einem der vorherigen Ansprüche, **dadurch gekennzeichnet, dass** das zirkulierende Wasser vor der Aufteilung in einen Teilstrom und einen Hauptstrom mittels zumindest eines Trommelsiebs und/oder eines Mikrosiebs und/oder eines Tuchfilters aufbereitet wird.

12. Verfahren nach einem der vorherigen Ansprüche, **dadurch gekennzeichnet, dass** das zirkulierende Wasser mittels eines Fest-/Schwebebettreaktors (15) aufbereitet wird.

13. Verfahren nach einem der vorherigen Ansprüche, **dadurch gekennzeichnet, dass** permanent oder in zeitlichen Abständen wiederholt eine Ermittlung der Trübung und/oder des Gehaltes an gelöstem Eisen und/oder des Gehaltes an gelöstem Aluminium des zirkulierenden Wassers und/oder des Teilstromes vor und/oder nach der Ultra- und/oder Mikrofiltration durchgeführt wird.

14. Verfahren nach einem der vorherigen Ansprüche, **dadurch gekennzeichnet, dass** in dem Bypass stromauf der Ultra- und/oder Mikrofiltration dem Teilstrom Fällungs- und/oder Flockungsmittel zudosiert wird, wobei die Steuerung der zudosierten Menge des Fällungs- und/oder Flockungsmittels in Abhängigkeit des Massenstromes im Bypass und/oder in Abhängigkeit der Trübung des Teilstromes vor und/oder nach der Ultra- und/oder Mikrofiltration und/oder in Abhängigkeit des Gehaltes an gelöstem Eisen des Teilstromes und/oder in Abhängigkeit der Druckdifferenz über dem Filter der Ultra- und/oder Mikrofiltration und/oder in Abhängigkeit der Wassertemperatur und/oder in Abhängigkeit des pH-Wertes des Teilstromes erfolgt.

15. Verfahren nach einem der vorherigen Ansprüche, **dadurch gekennzeichnet, dass** in dem Bypass stromauf der Ultra- und/oder Mikrofiltration dem Teilstrom während eines begrenzten Zeitraumes zu Beginn eines Filterzyklus Eisensalz und/oder Aluminiumsalz zudosiert wird, welches dem Aufbau eines Filterkuchens auf Membranen eines Ultra- und/oder Mikrofiltrationsmoduls dient, wobei dieser Filterkuchen in einem Rückspülvorgang entfernt wird und der nächste Filterzyklus nach Beendigung des Rückspülvorgangs beginnt.

16. Verfahren nach einem der vorherigen Ansprüche, **dadurch gekennzeichnet, dass** die Steuerung des Massenstromes des Teilstromes in einem geschlossenen Regelkreis in Abhängigkeit der Trübung und/oder in Abhängigkeit des Gehaltes an gelöstem Eisen und/oder in Abhängigkeit des Gehaltes an gelöstem Aluminium und/oder in Abhängigkeit der Wassertemperatur und/oder in Abhängigkeit des pH-Wertes des zirkulierenden Wassers und/oder des Teilstromes in dem Bypass vor und/oder nach der Ultra- und/oder Mikrofiltration erfolgt.
